# EUROPEAN PATENT APPLICATION

(11) **EP 4 518 446 A1**
(43) Date of publication of application: **05.03.2025**
(21) Application number: 23795273.4
(22) Date of filing: 23.04.2023
(51) Int. Cl.: H04W 52/02

(54) **SIGNAL RECEIVING METHOD AND DEVICE AND TERMINAL**

(30) Priority: 29.04.2022 CN 202210475474
(71) Applicant: Vivo Mobile Communication Co., Ltd., Dongguan, Guangdong 523863 (CN)
(72) Inventor: WANG, Lihui, Dongguan, Guangdong 523863 (CN); QU, Xin, Dongguan, Guangdong 523863 (CN)
(74) Representative: Lavoix
(86) International application number: PCT/CN2023/090055
(87) International publication number: WO 2023/207840

(57) **Abstract**

This application discloses a signal receiving method and apparatus and a terminal, and belongs to the field of communication technologies. The signal receiving method in embodiments of this application includes: determining, by a terminal according to a first frequency domain parameter or a second frequency domain parameter, a target frequency domain parameter configured for receiving a low-power related signal, where the target frequency domain parameter includes at least one of a target center frequency, a target bandwidth, and target frequency domain start and end positions, the first frequency domain parameter is a frequency domain parameter of a first cell in which the terminal is located, and the second frequency domain parameter is a frequency domain parameter specified in a protocol or configured on a network side; and receiving, by the terminal, the low-power related signal according to a frequency domain resource corresponding to the target frequency domain parameter.

## Description

### CROSS-REFERENCE TO RELATED APPLICATIONS

This application claims priority to Chinese Patent Application No. 202210475474.6 filed in China on April 29, 2022, the entire content of which is hereby incorporated herein by reference.

### TECHNICAL FIELD

This application belongs to the field of communication technologies, and specifically, to a signal receiving method and apparatus and a terminal.

### BACKGROUND

By introducing a low-power wake-up signal (Low-Power Wake-Up Signal, LP-WUS), a terminal may enable a main communication module to be in an off state or a dormant state, so that power consumption of the terminal can be effectively reduced. The low-power wake-up signal can be modulated by amplitude shift keying (Amplitude Shift Keying, ASK), so that a wake-up module can detect the wake-up signal in an envelope detection manner, which can reduce power consumption to a microwatt level. When the low-power wake-up signal is introduced in a communication system, a terminal in a radio resource control (Radio Resource Control, RRC) idle (idle) state or an inactive (inactive) state, and a terminal in an RRC connected (connected) state can reduce power consumption by using the low-power wake-up signal. In addition, a low-power beacon (beacon) signal is introduced in a low-power wake-up receiver (Low-Power Wake-Up Receiver, LP-WUR)/LP-WUS in a mobile cellular system. The signal is configured for keeping coarse synchronization with a network, monitor a channel state, and determine whether the terminal is still within a service range, to support specific mobility of the terminal.

How the terminal receives low-power related signals such as the low-power wake-up signal and the low-power beacon signal is a technical problem that needs to be resolved today.

### SUMMARY

Embodiments of this application provide a signal receiving method and apparatus and a terminal, to resolve problems that are not clear in the related art as to how to implement receiving of a low-power related signal.

According to a first aspect, a signal receiving method is provided, including:
determining, by a terminal according to a first frequency domain parameter or a second frequency domain parameter, a target frequency domain parameter configured for receiving a low-power related signal, where the target frequency domain parameter includes at least one of a target center frequency, a target bandwidth, and target frequency domain start and end positions, the first frequency domain parameter is a frequency domain parameter of a first cell in which the terminal is located, and the second frequency domain parameter is a frequency domain parameter specified in a protocol or configured on a network side; and
receiving, by the terminal, the low-power related signal according to a frequency domain resource corresponding to the target frequency domain parameter.

According to a second aspect, a signal receiving apparatus is provided, including:
a determining module, configured to determine, according to a first frequency domain parameter or a second frequency domain parameter, a target frequency domain parameter configured for receiving a low-power related signal, where the target frequency domain parameter includes at least one of a target center frequency, a target bandwidth, and target frequency domain start and end positions, the first frequency domain parameter is a frequency domain parameter of a first cell in which the terminal is located, and the second frequency domain parameter is a frequency domain parameter specified in a protocol or configured on a network side; and
a receiving module, configured to receive the low-power related signal according to a frequency domain resource corresponding to the target frequency domain parameter.

According to a third aspect, a terminal is provided, where the terminal includes a processor and a memory, the memory stores a program or instructions executable on the processor, and the program or the instructions, when executed by the processor, implement the steps of the signal receiving method according to the first aspect.

According to a fourth aspect, a terminal is provided, including a processor and a communication interface, where the processor is configured to determine, according to a first frequency domain parameter or a second frequency domain parameter, a target frequency domain parameter configured for receiving a low-power related signal, where the target frequency domain parameter includes at least one of a target center frequency, a target bandwidth, and target frequency domain start and end positions, the first frequency domain parameter is a frequency domain parameter of a first cell in which the terminal is located, and the second frequency domain parameter is a frequency domain parameter specified in a protocol or configured on a network side; and
the communication interface is configured to receive the low-power related signal according to a frequency domain resource corresponding to the target frequency domain parameter.

According to a fifth aspect, a communication system is provided, including: a terminal and a network side device, where the terminal may be configured to perform the steps of the signal receiving method according to the first aspect.

According to a sixth aspect, a readable storage medium is provided, storing a program or instructions, where the program or the instructions, when executed by a processor, implement the steps of the signal receiving method according to the first aspect.

According to a seventh aspect, a chip is provided, including a processor and a communication interface, where the communication interface is coupled to the processor, and the processor is configured to run a program or instructions, to implement the signal receiving method according to the first aspect.

According to an eighth aspect, a computer program/program product is provided, being stored in a storage medium, where the computer program/program product, when executed by at least one processor, implements the signal receiving method according to the first aspect.

In the embodiments of this application, the terminal can determine the target frequency domain parameter of the low-power related signal based on the first frequency domain parameter of the first cell in which the terminal is located or the second frequency domain parameter specified in the protocol or configured on the network side, so that the terminal can receive the low-power related signal based on the determined target frequency domain parameter. In this way, it is clear that the terminal receives the frequency domain parameter of the low-power related signal, to avoid confusion of the terminal on receiving the low-power related signal, and ensure communication of the terminal.

### BRIEF DESCRIPTION OF THE DRAWINGS

FIG. 1 is a block diagram of a wireless communication system to which an embodiment of this application may be applied;
FIG. 2a is an operating principle diagram of a low-power related signal according to an embodiment of this application;
FIG. 2b is a schematic diagram of an operating bandwidth of a terminal involved in an embodiment of this application;
FIG. 3 is a flowchart of a signal receiving method according to an embodiment of this application;
FIG. 4 is a structural diagram of a signal receiving apparatus according to an embodiment of this application;
FIG. 5 is a structural diagram of a communication device according to an embodiment of this application; and
FIG. 6 is a structural diagram of a terminal according to an embodiment of this application.

### DETAILED DESCRIPTION

The technical solutions in embodiments of this application are clearly described below with reference to the accompanying drawings in the embodiments of this application. Apparently, the described embodiments are merely some rather than all of embodiments of this application. All other embodiments obtained by a person of ordinary skill in the art based on embodiments of this application shall fall within the protection scope of this application.

In the specification and claims of this application, terms "first" and "second" are used to distinguish similar objects, but are not used to describe a specific sequence or order. It may be understood that the terms used in such a way is interchangeable in proper circumstances, so that embodiments of this application can be implemented in other sequences than the sequence illustrated or described herein. In addition, objects distinguished by "first" and "second" are usually of Type, and the number of objects is not limited. For example, a first object may be one or more than one. In addition, in the specification and claims, "and/or" means at least one of the connected objects, and the character "/" generally indicates an "or" relation between associated objects.

It should be noted that, the technology described in the embodiments of this application is not limited to a long term evolution (Long Term Evolution, LTE)/LTE evolution (LTE-Advanced, LTE-A) system, but may be further used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access, (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the described technologies may be used both for the systems and radio technologies mentioned above and may also be used for other systems and radio technologies. The following descriptions describe a new radio (New Radio, NR) system for the objective of being used as an example, and NR terms are used in most of the descriptions below. However, these technologies may also be applied to applications other than NR system applications, such as a 6^{th} generation (6^{th} Generation, 6G) communication system.

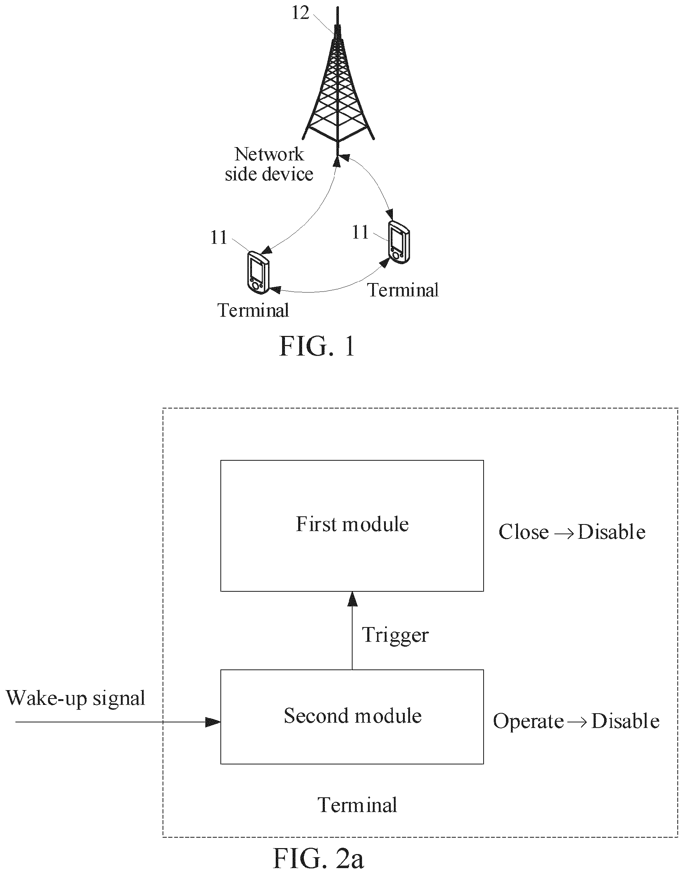

FIG. 1 is a block diagram of a wireless communication system to which an embodiment of this application may be applied. The wireless communication system includes a terminal 11 and a network side device 12. The terminal 11 may be a terminal side device such as a mobile phone, a tablet personal computer (Tablet Personal Computer), a laptop computer (Laptop Computer), or referred to as a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), and a smart home (a home device with a wireless communication function, such as a refrigerator, a television, a washing machine, or a piece of furniture), a game console, a personal computer (personal computer, PC), a cash machine, or a self-service machine. The wearable device includes: a smart watch, a smart bracelet, smart headphones, smart glasses, smart jewelry (a smart bracelet, a smart bracelet, a smart ring, a smart necklace, a smart anklet, a smart anklet, and the like), a smart wristband, smart clothing, and the like. It should be noted that in the embodiments of this application, a specific type of the terminal 11 is not limited. The network side device 12 may include an access network device or a core network device. The access network device may also be referred to as a radio access network device, a radio access network (Radio Access Network, RAN), a radio access network function, or a radio access network unit. The access network device may include a base station, a wireless local area network (Wireless Local Area Network, WLAN) access point, a wireless fidelity (Wireless Fidelity, Wi-Fi) node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service S, ESS), a home NodeB, a home evolved NodeB, a transmission reception point (Transmission Reception Point, TRP), or some other proper terms in the field. Provided that the same technical effect is achieved, the base station is not limited to a specific technology vocabulary. It should be noted that, in the embodiments of this application, only a base station in the NR system is used as an example for description, but a specific type of the base station is not limited.

In order to better understand the technical solutions provided in the embodiments of this application, related concepts that may be involved in the embodiments of this application are explained below.

NR low-power wake-up receiver/Wake-up signal (Low-power wake-up receiver/wake-up signal, LP WUR/WUS)

A basic working principle of the LP WUR is that a receiving end (for example, User Equipment (UE)) includes a first module and a second module. The first module is a main communication module, and is configured to receive communication data transmitted by a transmitting end and send communication data. The second module is a low-power module, and is configured to receive a low-power wake-up signal sent by the transmitting end, and wake up a main communication module of the receiving end. As shown in FIG. 2a, when the first module is not woken up by the second module, the first module is always in a disabled state and does not receive data. When downlink data arrives, the second module detects a wake-up signal sent by the transmitting end, and the wake-up signal includes identification information of the terminal, the second module triggers the first module to switch from the disabled state to an enabled state to receive and send the data. The second module may be continuously enabled or intermittently enabled. When the second module is enabled, the second module may receive the low-power wake-up signal.

### Bandwidth part (Bandwidth Part, BWP)/Initial bandwidth part (Initial BWP)

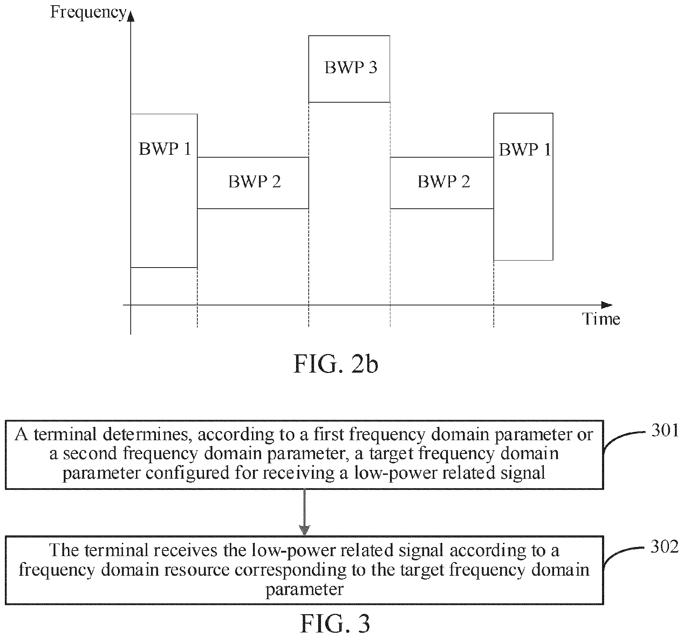

The NR can support a wide bandwidth, up to 400 MHz. However, to reduce power consumption of the terminal and flexibly implement different service application scenarios, the NR introduces the BWP, that is, the terminal can operate on different BWPs. For example, referring to FIG. 2b, at a moment T1, the terminal operates on a BWP 1, at a moment T2, the terminal operates on a BWP 2, at a moment T3, the terminal operates on a BWP 3, at a moment T4, the terminal again operates on the BWP 2, and at a moment T5, the terminal operates on the BWP 1. The BWP bandwidths may be different, and subcarrier spacings may also be different. More importantly, operating frequencies of a radio frequency center may also be different. In FIG. 2b, a radio frequency center of the BWP 1 and a radio frequency center of the BWP 2 are the same. This means that an operating frequency of a radio frequency device of the terminal may not be switched. An operating center frequency of the BWP 3 is changed. This means that when the terminal switches from the BWP 2 to the BWP 3, the operating frequency of the radio frequency device of the terminal needs to be changed. A benefit is that the radio frequency device does not need to operate on a wide bandwidth (where in FIG. 2b, if a frequency is not switched, the radio frequency device needs to support a bandwidth of BWP 1+BWP 3).

An initial uplink (Uplink, UL) BWP and an initial downlink (Downlink, DL) BWP, namely, an initial DL BWP and an initial UL BWP are configured in a system information block (System Information Block, SIB) 1. If the initial BWP is not configured, it is by default considered that, a size of the initial BWP is a size of a control resource set (Control Resource Set, CORESET) #0. The initial BWP is mainly configured for an initial access process, such as receiving of the SIB 1, receiving of a random access response (Random Access Response, RAR), receiving of a message (Message, Msg) 4, and sending of a preamble (preamble) and an Msg 3 in the random access process, and the like.

Cell search/Initial access process UE side procedure:
1. Receive a synchronization signal block (Synchronization Signal and PBCH block, SSB), decode a master information block (Master Information Block, MIB) carried in a physical broadcast channel (Physical broadcast channel, PBCH) in the SSB, to obtain a CORESET #0 information;
2. monitor downlink control information (Downlink Control Information, DCI) for the SIB 1 in the CORESET #0; and
3. decode the SIB 1, to obtain an initial DL/UL BWP and a CORESET for the RAR or msg 4 DCI.

A search space (Search Space, SS) defines information such as a physical downlink control channel (Physical downlink control channel, PDCCH), an orthogonal frequency division multiplex (Orthogonal frequency division multiplex, OFDM) symbol number, and a PDCCH monitoring period.

There are a plurality of types of search spaces for the PDCCH in the NR, including a common search space (Common Search Space, CSS) and a UE-specific search space (UE-specific Search Space, USS), as shown in Table 1 below:

**Table 1. SS type table**

| **SS type** | **Function** |
|---|---|
| Type 0 common Search Space (Type 0 CSS) | Configured for receiving a PDCCH scheduling a SIB 1 |
| Type 0A common Search Space | Configured for receiving a PDCCH scheduling another SIB message |
| Type 1 common Search Space | Configured for receiving a PDCCH of an RACH |
| Type 2 common Search Space | Configured for receiving a paged (Paged) PDCCH |
| Type 3 common Search Space | Configured for receiving common DCI of a group of users |
| UE-specific Search Space | Configured for receiving a PDCCH scheduling user-specific data |

A signal receiving method provided in the embodiments of this application is described in detail below by using some embodiments and application scenarios with reference to the accompanying drawings.

FIG. 3 is a flowchart of a signal receiving method according to an embodiment of this application. As shown in FIG. 3, the method includes the following steps.

Step 301: A terminal determines, according to a first frequency domain parameter or a second frequency domain parameter, a target frequency domain parameter configured for receiving a low-power related signal.

The target frequency domain parameter includes at least one of a target center frequency, a target bandwidth, and target frequency domain start and end positions, the first frequency domain parameter is a frequency domain parameter of a first cell in which the terminal is located, and the second frequency domain parameter is a frequency domain parameter specified in a protocol or configured on a network side. The target frequency domain start and end positions include at least one of a target frequency domain start position and a target frequency domain end position.

It should be noted that, the low-power related signal may be a signal related to implementing a low-power function of the terminal. For example, the low-power related signal includes signals such as a low-power wake-up signal and a low-power beacon signal. For example, the low-power wake-up signal (LP-WUS) is used as an example. The terminal determines a target frequency domain parameter, such as a target center frequency or the target frequency domain start and end positions, configured for receiving the LP-WUS, so that the terminal can receive the low-power wake-up signal based on the determined target center frequency or the target frequency domain start and end positions.

It should be noted that, in some embodiments, the low-power beacon signal (beacon signal) may also be referred to as a low-power activation signal. The low-power beacon signal may be configured for focusing on maintaining coarse synchronization between the terminal and a network, monitoring a channel state, determining whether the terminal is still within a service range, and supporting mobility of the terminal. To better describe the technical solutions of the embodiments of this application, some specific implementations in the subsequent embodiments are described by using the low-power wake-up signal as an example. These embodiments are also applicable to the low-power beacon signal.

In the embodiments of this application, an example in which the target frequency domain parameter is the target center frequency is used. The target center frequency may be determined based on the frequency domain parameter of the first cell. For example, a target center frequency of the low-power related signal is determined based on a frequency of the first cell in which a main communication module of the terminal is located, or a target center frequency of the low-power related signal may be determined based on a center frequency that is specified in a protocol or configured on a network side and that is of the low-power related signal.

For example, the low-power wake-up signal is used as an example. If a specific center frequency of the low-power wake-up signal is specified in a protocol or configured on a network side, the terminal may determine the center frequency as the target center frequency of the low-power wake-up signal, that is, the terminal may receive the low-power wake-up signal based on the center frequency. It should be noted that, the specific center frequency of the low-power wake-up signal specified in the protocol or configured on the network side may be different from an operating frequency of the main communication module.

Alternatively, the terminal may also determine the target center frequency based on the frequency of the first cell in which the main communication module is located. For example, the terminal may determine the target center frequency of the low-power wake-up signal based on a center frequency of a current serving cell in which the main communication module of the terminal is located. For example, the terminal uses the center frequency of the current serving cell in which the main communication module is located as the target center frequency of the low-power wake-up signal, or determines the target center frequency of the low-power wake-up signal based on the center frequency of the current serving cell in which the main communication module is located and a target frequency offset. It should be noted that, a possible case of the first cell and the frequency of the first cell is described in detail in a subsequent embodiment, and details are not described herein again.

Alternatively, the terminal may further determine the target center frequency of the low-power wake-up signal based on a frequency domain resource of the low-power wake-up signal. For example, the frequency domain resource of the low-power wake-up signal includes a frequency domain start position and a bandwidth, and the terminal may determine the target center frequency of the low-power wake-up signal based on the frequency domain start position and the bandwidth of the low-power wake-up signal. For example, the target center frequency f0=f_start+(f_bw/2), where f_start is the frequency domain start position, and f_bw is the bandwidth. Certainly, the frequency domain resource may be further another possible case, and that the target center frequency is determined based on the frequency domain resource of the low-power wake-up signal may be further another possible case. Details are not described herein in detail.

In the embodiments of this application, the terminal can determine the target center frequency of the low-power related signal based on the frequency of the first cell in which the terminal is located and/or the frequency specified in the protocol or configured on the network side and/or the frequency domain resource of the low-power related signal. In this way, the terminal determines the target center frequency of the low-power related signal in a more flexible manner.

In the embodiments of this application, the target frequency domain parameter of the low-power related signal may further include a target bandwidth and/or a target frequency domain start position and/or a target frequency domain end position. In other words, the terminal can further determine, based on a first frequency domain parameter or a second frequency domain parameter, at least one of the target bandwidth, the target frequency domain start position, and the target frequency domain end position configured for receiving the low-power related signal.

For example, the low-power wake-up signal is used as an example. The terminal may determine the frequency domain resource of the low-power wake-up signal based on the target center frequency of the low-power wake-up signal, for example, determine the bandwidth of the low-power wake-up signal based on the target center frequency of the low-power wake-up signal, or may determine a frequency domain start position of the low-power wake-up signal based on the low-power wake-up signal and a preset bandwidth. For example, the frequency domain start position f_start=t0-(f_bw/2), where f0 is the target center frequency of the low-power wake-up signal, and f_bw is the bandwidth of the low-power wake-up signal.

In the embodiments of this application, the terminal can determine, based on the first frequency domain parameter or the second frequency domain parameter, at least one of the target bandwidth, the target frequency domain start position, and the target frequency domain end position configured for receiving the low-power related signal, so that the terminal determines the frequency domain resource of the low-power related signal in a more flexible manner.

Step 302: The terminal receives the low-power related signal according to a frequency domain resource corresponding to the target frequency domain parameter.

For example, the low-power wake-up signal is used as an example. After the terminal determines at least one of the target center frequency, the target bandwidth, and target frequency domain start and end positions of the low-power wake-up signal, the terminal can receive the low-power wake-up signal based on the determined at least one of the target center frequency, the target bandwidth, and the target frequency domain start and end positions. If the frequency domain resource includes the frequency domain start position, the terminal can start to receive the low-power wake-up signal at the determined frequency domain start position, the terminal can receive the low-power wake-up signal near the determined target center frequency, or the like. This is not to be excessively listed herein.

In the embodiments of this application, the terminal can determine the target frequency domain parameter of the low-power related signal based on the first frequency domain parameter of the first cell in which the terminal is located or the second frequency domain parameter specified in the protocol or configured on the network side, so that the terminal can receive the low-power related signal based on the determined target frequency domain parameter. In this way, it is clear that the terminal receives the frequency domain parameter of the low-power related signal, to ensure that the terminal can receive the low-power related signal and ensure communication of the terminal.

In the embodiments of this application, in a case that the target frequency domain parameter includes the target center frequency, the first frequency domain parameter includes at least one of the following:
a center frequency of the first cell;
a center frequency of a cell defining synchronization signal block (Cell Defining SSB, CD-SSB) of the first cell;
a center frequency of a non cell defining synchronization signal block (Non Cell Defining SSB, NCD-SSB) of the first cell;
a frequency of a common reference point of the first cell; and
a center frequency of a first BWP of the first cell.

Optionally, the first cell includes at least one of the following: a serving cell, a primary cell (Primary cell, Pcell), and a secondary cell (Secondary Cell, Scell). In a case that the first cell includes the serving cell, the serving cell may include the primary cell (such as a Pcell or a primary secondary cell (Primary secondary cell, PScell)) and the secondary cell. In a case that the first cell includes the primary cell, the primary cell includes only the Pcell or the PScell.

For example, if the first cell is the serving cell of the terminal, the terminal may determine the target center frequency of the low-power related signal based on the center frequency of the serving cell. For example, the terminal may use the center frequency of the serving cell as the target center frequency of the low-power related signal, or may use a sum or a difference between the center frequency of the serving cell and a preset frequency offset as the target center frequency of the low-power related signal.

Certainly, the first cell may alternatively be the primary cell or the secondary cell, and the frequency of the first cell may alternatively be in another possible form as described above. This is not listed one by one herein.

Optionally, the determining, by a terminal according to a first frequency domain parameter, a target frequency domain parameter configured for receiving a low-power related signal may include at least one of the following:
in a case that the first frequency domain parameter includes the center frequency of the first cell, obtaining, by the terminal, a first frequency offset, and determining, based on the first frequency offset and the center frequency of the first cell, the target center frequency at which the terminal receives the low-power related signal, where the first frequency offset is a frequency offset that is specified in a protocol or configured on a network side and that is of the target center frequency of the low-power related signal relative to the center frequency of the first cell;
in a case that the first frequency domain parameter includes the center frequency of the CD-SSB of the first cell, obtaining, by the terminal, a second frequency offset, and determining, based on the second frequency offset and the center frequency of the CD-SSB, the target center frequency at which the terminal receives the low-power related signal, where the second frequency offset is a frequency offset that is specified in the protocol or configured on the network side and that is of the target center frequency of the low-power related signal relative to the center frequency of the CD-SSB;
in a case that the first frequency domain parameter includes the center frequency of the NCD-SSB of the first cell, obtaining, by the terminal, a third frequency offset, and determining, based on the third frequency offset and the center frequency of the NCD-SSB, the target center frequency at which the terminal receives the low-power related signal, where the third frequency offset is a frequency offset that is specified in the protocol or configured on the network side and that is of the target center frequency of the low-power related signal relative to the center frequency of the NCD-SSB;
in a case that the first frequency domain parameter includes the frequency of the common reference point of the first cell, obtaining, by the terminal, a fourth frequency offset, and determining, based on the fourth frequency offset and the frequency of the common reference point, the target center frequency at which the terminal receives the low-power related signal, where the fourth frequency offset is a frequency offset that is specified in the protocol or configured on the network side and that is of the target center frequency of the low-power related signal relative to the frequency of the common reference point; and
in a case that the first frequency domain parameter includes the center frequency of the first BWP of the first cell, obtaining, by the terminal, a fifth frequency offset, and determining, based on the fifth frequency offset and the center frequency of the first BWP, the target center frequency at which the terminal receives the low-power related signal, where the fifth frequency offset is a frequency offset that is specified in the protocol or configured on the network side and that is of the target center frequency of the low-power related signal relative to the center frequency of the first BWP.

For example, in an implementation, the first frequency domain parameter includes a center frequency f1 of the first cell, and a first frequency offset offset 1 of a target center frequency f0 of the low-power related signal relative to the center frequency f1 of the first cell is specified in the protocol or configured on the network side. In this case, the terminal can determine the target center frequency f0 of the low-power related signal based on f1 and offset 1. For example, f0=f1-offset 1 or f0=f1+offset 1.

In another implementation, the first frequency domain parameter includes a center frequency f2 of the CD-SSB of the first cell, and a second frequency offset offset 2 of the target center frequency f0 of the low-power related signal relative to the center frequency f2 of the CD-SSB of the first cell is specified in the protocol or configured on the network side. In this case, the terminal can determine the target center frequency f0 of the low-power related signal based on f2 and offset 2. For example, f0=f2-offset 2 or f0=f2+offset 2.

In still another implementation, the first frequency domain parameter includes a center frequency f3 of the NCD-SSB of the first cell, and a third frequency offset offset 3 of the target center frequency f0 of the low-power related signal relative to the center frequency f3 of the NCD-SSB of the first cell is specified in the protocol or configured on the network side. In this case, the terminal can determine the target center frequency f0 of the low-power related signal based on f3 and offset 3. For example, f0=f3-offset 3 or f0=f3+offset 3.

In still another implementation, the first frequency domain parameter includes a common reference point (Point A) frequency f4 of the first cell, and a fourth frequency offset offset 4 of the target center frequency f0 of the low-power related signal relative to the frequency f4 of the common reference point of the first cell is specified in the protocol or configured on the network side. In this case, the terminal can determine the target center frequency f0 of the low-power related signal based on f4 and offset 4. For example, f0=f4-offset 4 or f0=f4+offset 4.

In still another implementation, the first frequency domain parameter includes a center frequency f5 of the first BWP of the first cell, and a fifth frequency offset offset 5 of the target center frequency f0 of the low-power related signal relative to the center frequency f5 of the first BWP of the first cell is specified in the protocol or configured on the network side. In this case, the terminal can determine the target center frequency f0 of the low-power related signal based on f5 and offset 5. For example, f0=f5-offset 5 or f0=f5+offset 5.

Optionally, the first BWP includes at least one of the following: a current active BWP (active BWP, or also referred to as an activated BWP), a default BWP (default BWP), an initial downlink BWP (initial DL BWP, such as a BWP #0), and a first active downlink BWP (first Active Downlink BWP).

Optionally, the first BWP is specified in a protocol or configured on a network side, and the first BWP satisfies any one of the following:
the first BWP is configured for transmitting only the low-power related signal; and
the first BWP is configured for transmitting the low-power related signal and other data and signals other than the low-power related signal.

For example, the first BWP specified in the protocol or configured on the network side may be a specific BWP of the low-power related signal, that is, the BWP is configured for transmitting only the low-power related signal (such as the LP-WUS). The BWP may not be used as an RRC-configured BWP (RRC-configured BWP). In other words, the BWP of the low-power related signal does not occupy a name that the UE can support at most 1 or 4 RRC-configured BWPs.

Alternatively, the first BWP specified in the protocol or configured on the network side may be a BWP that is multiplexed with other data or signals. The BWP is used as the RRC-configured BWP (RRC-configured BWP). In other words, the BWP occupies a name that the UE can support at most 1 or 4 RRC-configured BWPs.

In the embodiments of this application, in a case that the target frequency domain parameter includes the target frequency domain start position, the first frequency domain parameter includes at least one of the following:
a frequency domain start position of the first cell;
a frequency domain start position of a first BWP of the first cell;
a frequency of a common reference point of the first cell; and
a frequency domain start position of a CD-SSB of the first cell or a frequency domain start position of an NCD-SSB of the first cell.

Optionally, an absolute frequency domain position of the low-power related signal may also be specified in the protocol or configured on the network side, and the terminal may use the absolute frequency domain position as the frequency domain start position of the low-power related signal.

Alternatively, the frequency domain start position of the low-power related signal may also be determined based on the center frequency of the low-power related signal specified in the protocol or configured on the network side. For example, the center frequency of the low-power related signal specified in the protocol or configured on the network side is f0, and the frequency domain start position f_start=f0-(f_bw/2) of the low-power related signal, where f_bw is a bandwidth occupied by the low-power related signal.

In the embodiments of this application, the frequency domain start position of the low-power related signal may be further determined based on the frequency domain start position of the first cell in which the main communication module is located, and/or may be further determined based on the frequency domain start position of the first BWP of the first cell, the frequency of the common reference point, the frequency domain start position of the CD-SSB, and the frequency domain start position of the NCD-SSB.

Alternatively, the frequency domain start position of the low-power related signal may be further determined based on the center frequency of the low-power related signal specified in the protocol or configured on the network side, and a frequency domain offset of the frequency domain start position of the low-power related signal relative to the frequency.

Optionally, the determining, by a terminal according to a second frequency domain parameter, a target frequency domain parameter configured for receiving a low-power related signal includes at least one of the following:
determining, by the terminal according to a center frequency specified in a protocol or configured on a network side, the target center frequency configured for receiving the low-power related signal; and
determining, by the terminal according to the center frequency specified in the protocol or configured on the network side and a first frequency offset, the frequency domain start position configured for receiving the low-power related signal.

For example, the center frequency f0 of the low-power related signal is specified in the protocol or configured on the network side. In this case, the terminal determines the center frequency f0 as the target center frequency configured for receiving the low-power related signal.

Alternatively, a first frequency domain offset offset_bw1 of the frequency domain start position f_start of the low-power related signal relative to the center frequency f0 is specified in the protocol or configured on the network side. In this case, the terminal can determine the frequency domain start position f_start of the low-power related signal based on the center frequency f0 and the first frequency domain offset offset_bw1. For example, f_start=f0'-offset_bw1 or f_start=f0'+offset_bw1.

Alternatively, the terminal may further determine the frequency domain start position of the low-power related signal based on the frequency domain parameter of the first cell.

Optionally, the target frequency domain parameter includes the target frequency domain start position, and the determining, by a terminal according to a first frequency domain parameter, a target frequency domain parameter configured for receiving a low-power related signal includes at least one of the following:
obtaining, by the terminal, a second frequency domain offset and the frequency domain start position of the first cell, and determining the target frequency domain start position of the low-power related signal based on the second frequency domain offset and the frequency domain start position of the first cell, where the second frequency domain offset is a frequency domain offset that is specified in a protocol or configured on a network side and that is of the target frequency domain start position of the low-power related signal relative to the frequency domain start position of the first cell;
obtaining, by the terminal, a third frequency domain offset and the frequency domain start position of the first BWP of the first cell, and determining the target frequency domain start position of the low-power related signal based on the third frequency domain offset and the frequency domain start position of the first BWP, where the third frequency domain offset is a frequency domain offset that is specified in the protocol or configured on the network side and that is of the target frequency domain start position of the low-power related signal relative to the frequency domain start position of the first BWP;
obtaining, by the terminal, a fourth frequency domain offset and the frequency domain start position of the common reference point of the first cell, and determining the target frequency domain start position of the low-power related signal based on the fourth frequency domain offset and the frequency domain start position of the common reference point, where the fourth frequency domain offset is a frequency domain offset that is specified in the protocol or configured on the network side and that is of the target frequency domain start position of the low-power related signal relative to the frequency domain start position of the common reference point;
obtaining, by the terminal, a fifth frequency domain offset and the frequency domain start position of the CD-SSB of the first cell, and determining the target frequency domain start position of the low-power related signal based on the fifth frequency domain offset and the frequency domain start position of the CD-SSB, where the fifth frequency domain offset is a frequency domain offset that is specified in the protocol or configured on the network side and that is of the target frequency domain start position of the low-power related signal relative to the frequency domain start position of the CD-SSB; and
obtaining, by the terminal, a sixth frequency domain offset and the frequency domain start position of the NCD-SSB of the first cell, and determining the target frequency domain start position of the low-power related signal based on the sixth frequency domain offset and the frequency domain start position of the NCD-SSB, where the sixth frequency domain offset is a frequency domain offset that is specified in the protocol or configured on the network side and that is of the target frequency domain start position of the low-power related signal relative to the frequency domain start position of the NCD-SSB.

For example, in an implementation, a second frequency domain offset offset_bw2 of the target frequency domain start position f_start of the low-power related signal relative to the frequency domain start position f_cell of the first cell is specified in the protocol or configured on the network side. In this case, the terminal can determine the target frequency domain start position f_start of the low-power related signal based on the frequency domain start position f_cell of the first cell and the second frequency domain offset offset_bw2. For example, f_start=f_cell-offset_bw2 or f_start=f_cell+offset_bw2.

In another implementation, a third frequency domain offset offset_bw3 of the target frequency domain start position f_start of the low-power related signal relative to the frequency domain start position RB 0 of the first BWP of the first cell is specified in the protocol or configured on the network side. In this case, the terminal can determine the target frequency domain start position f_start of the low-power related signal based on the frequency domain start position RB 0 of the first BWP and the third frequency domain offset offset_bw3. For example, f_start=RB 0-offset_bw3 or f_start=RB 0+offset_bw3.

In still another implementation, a fourth frequency domain offset offset_bw4 of the target frequency domain start position f_start of the low-power related signal relative to the frequency domain start position f_point of the common reference point of the first cell is specified in the protocol or configured on the network side. In this case, the terminal can determine the target frequency domain start position f_start of the low-power related signal based on the frequency domain start position f_point of the common reference point and the fourth frequency domain offset offset_bw4. For example, f_start=f_point-offset_bw4 or f_start=f_point+offset_bw4.

In still another implementation, a fifth frequency domain offset offset_bw5 of the target frequency domain start position f_start of the low-power related signal relative to the frequency domain start position fs1 of the CD-SSB of the first cell is specified in the protocol or configured on the network side. In this case, the terminal can determine the target frequency domain start position f_start of the low-power related signal based on the frequency domain start position fs1 of the CD-SSB and the fifth frequency domain offset offset_bw5. For example, f_start=fs1-offset_bw5 or f_start=fs1+offset_bw5.

In still another implementation, a sixth frequency domain offset offset_bw6 of the target frequency domain start position f_start of the low-power related signal relative to the frequency domain start position fs2 of the NCD-SSB of the first cell is specified in the protocol or configured on the network side. In this case, the terminal can determine the target frequency domain start position f_start of the low-power related signal based on the frequency domain start position fs2 of the NCD-SSB and the sixth frequency domain offset offset_bw6. For example, f_start=fs2-offset_bw6 or f_start=fs2+offset_bw6.

In the embodiments of this application, the terminal can determine the frequency domain start position of the low-power related signal based on the frequency domain start position of related parameters of the first cell, so that a manner in which the terminal determines the frequency domain start position of the low-power related signal is more flexible. Optionally, in a case that the target parameter of the low-power related signal determined by the terminal includes the frequency domain resource of the low-power related signal, before the terminal determines the target parameter configured for receiving the low-power related signal, or after the terminal determines the frequency domain start position of the low-power wake-up signal, the method may further include:
determining, by the terminal, a target bandwidth configured for receiving the low-power related signal.

Optionally, in a case that the target frequency domain parameter includes the target bandwidth, the terminal determines, according to at least one of the following, the target bandwidth configured for receiving the low-power related signal: a network side configuration, a capability of the terminal, and protocol specification.

For example, the target bandwidth configured for receiving the low-power related signal is configured on the network side. For example, the BWP configured on the network side is 20M, where 5M is configured for the low-power related signal. Optionally, the target bandwidth configured on the network side may be greater than or equal to a bandwidth that the terminal needs to occupy for actually transmitting the low-power related signal.

Alternatively, the terminal may also determine the target bandwidth configured for receiving the low-power related signal based on the capability of the terminal. The capability of the terminal may refer to a receiving capability or a transmission capability of the terminal. Alternatively, a value of the target bandwidth for the terminal to receive the low-power related signal is specified in the protocol.

In the embodiments of this application, the low-power related signal includes the low-power wake-up signal and a low-power beacon signal, and the method may further include:
determining, by the terminal, a target frequency domain parameter of a second signal based on a target frequency domain parameter of a first signal, where
the first signal is one of the low-power wake-up signal and the low-power beacon signal, and the second signal is the other of the low-power wake-up signal and the low-power beacon signal.

For example, the first signal is the low-power wake-up signal, and the second signal is the low-power beacon signal. Therefore, the terminal can determine a target frequency domain parameter of the low-power beacon signal based on a target frequency domain parameter of the low-power wake-up signal. For example, the terminal determines a target center frequency f0' of the low-power beacon signal based on a target center frequency f0 of the low-power wake-up signal, for example, f0'=f0. Alternatively, the terminal determines a frequency domain start position f_start' of the low-power beacon signal based on a frequency domain start position f_start of the low-power wake-up signal, for example, f_start'=f_start.

Optionally, the determining, by the terminal, a target frequency domain parameter of a second signal based on a target frequency domain parameter of a first signal includes:
in a case that the target frequency domain parameter includes the target center frequency, determining, by the terminal, the target center frequency of the first signal as the target center frequency of the second signal, or determining the target center frequency of the second signal based on the target center frequency of the first signal and a preset frequency offset; and
in a case that the target frequency domain parameter includes a target frequency domain resource, determining, by the terminal, the target frequency domain resource of the first signal as the target frequency domain resource of the second signal, or determining the target frequency domain resource of the second signal based on at least one of the target frequency domain resource of the first signal and the preset frequency domain offset, where the target frequency domain resource includes at least one of the target bandwidth and the target frequency domain start and end positions.

For example, if the target parameter includes the target center frequency, the first signal is the low-power wake-up signal, and the second signal is the low-power beacon signal. That is, the terminal can determine the target center frequency f0' of the low-power beacon signal based on the target center frequency f0 of the low-power wake-up signal, for example, f0'=f0. Alternatively, the terminal may also determine the target center frequency f0' of the low-power beacon signal based on the target center frequency f0 of the low-power wake-up signal and the preset frequency offset offset 10. For example, f0'=f0+offset 10 or f0'=f0-offset 10.

If the target parameter includes a frequency domain resource, the first signal is the low-power wake-up signal, and the second signal is the low-power beacon signal. For example, the terminal can determine a frequency domain start position f_start' of the low-power beacon signal based on a frequency domain start position f_start of the low-power wake-up signal, for example, f_start'=f_start. Alternatively, a terminal determines the frequency domain start position f_start' of the low-power beacon signal based on the frequency domain start position f_start of the low-power wake-up signal and the preset frequency domain offset offset 11. For example, f_start'=f_start+offset 11, or f_start'=f_start-offset 11. It should be noted that, the frequency domain resource may be further a frequency domain end position, a bandwidth, or the like. For example, the terminal can determine a frequency-domain end position f_end' of the low-power beacon signal based on a frequency-domain end position f_end of the low-power wake-up signal, for example, f_end'=f_end. Alternatively, the terminal determines a bandwidth f_bw' occupied by the low-power beacon signal based on a bandwidth f_bw' occupied by the low-power wake-up signal, for example, f_bw'=f_bw, and the like. This is not excessively listed in this embodiment.

Certainly, the first signal may alternatively be the low-power beacon signal, and the second signal is the low-power wake-up signal. In this case, the terminal can determine the target center frequency of the low-power beacon signal based on the target center frequency of the low-power beacon signal, and/or determine the target frequency domain resource of the low-power beacon signal based on the target frequency domain resource of the low-power beacon signal. Details are not described herein again in detail. In this way, the terminal can determine the target center frequency and/or the target frequency domain resource of the low-power related signal more flexibly, to ensure receiving of the low-power related signal by the terminal.

In the embodiments of this application, the method may further include:
performing, by the terminal, a first operation on a second BWP after the terminal stops monitoring the low-power related signal or is woken up by the low-power related signal, where
the first operation includes at least one of the following:
   receiving and/or measuring an SSB;
   monitoring a PDCCH transmitted on a first target CSS type, where the first target CSS type includes at least one of a CSS type 0, a CSS type 0A, a CSS type 1, and a CSS type 2;
   monitoring a PDCCH transmitted on a second target CSS type, where the second target CSS type includes a CSS type 3;
   monitoring a PDCCH transmitted on a USS;
   receiving a physical downlink shared channel (Physical Downlink Shared Channel, PDSCH);
   receiving and/or measuring a downlink channel state information reference signal (Channel State Information Reference Signal, CSI-RS);
   receiving and/or measuring a tracking reference signal (Tracking Reference Signal, TRS);
   transmitting a target channel, where the target channel includes at least one of the following: a physical random access channel (Physical Random Access Channel, PRACH), a physical uplink shared channel (Physical Uplink Shared Channel, PUSCH), and a physical uplink control channel (Physical Uplink Control Channel, PUCCH); and
   a sounding reference signal (Sounding Reference Signal, SRS).

For example, the low-power wake-up signal is used as an example. After the terminal starts to monitor the low-power wake-up signal to stop monitoring the low-power wake-up signal (for example, the terminal is woken up by the low-power wake-up signal or detects that a current channel link degrades or when the terminal needs to send uplink data or a signal), the terminal may start to perform the foregoing first operation in the second BWP, for example, receive and/or measure an SSB, receive and/or measure a CSI-RS and a TRS, transmit a PUSCH and/or a PUCCH, and the like. Details are not described herein in detail.

In the embodiments of this application, after stopping monitoring the low-power related signal or being woken up by the low-power related signal, the terminal can perform the foregoing first operation on the second BWP, so that a behavior of the terminal after the terminal stops monitoring the low-power related signal or is woken up by the low-power related signal is defined, so that a related behavior of the terminal is clear.

It should be noted that, specifically, the CSS type 0, the CSS type 0A, the CSS type 1, the CSS type 2, and the CSS type 3 are shown in the following Table 2:

**Table 2. CSS type table**

| **CSS type** | **Function** |
|---|---|
| Type 0 common Search Space (CSS type 0) | Configured for receiving a PDCCH scheduling a SIB 1 |
| Type 0A common Search Space (CSS type 0A) | Configured for receiving a PDCCH scheduling another SIB message |
| Type 1 common Search Space (CSS type 1) | Configured for receiving a PDCCH of an RACH |
| Type 2 common Search Space (CSS type 2) | Configured for receiving a paged (Paged) PDCCH |
| Type 3 common Search Space (CSS type 3) | Configured for receiving common DCI of a group of users |
| UE-specific Search Space (USS) | Configured for receiving a PDCCH scheduling user-specific data |

It should be noted that, the second BWP may be different from the first BWP.

Optionally, the second BWP includes at least one of the following:
an initial BWP (initial BWP, such as a BWP #0);
a default BWP (default BWP);
a first active downlink BWP (first Active Downlink BWP);
a current active BWP (active BWP); and
a target BWP specified in a protocol or configured on a network side, where the target BWP is a BWP on which the first operation is performed after the terminal is woken up by a low-power related signal.

Optionally, the current active BWP includes at least one of the following:
a BWP on which the low-power related signal is transmitted; and
a BWP used before the terminal monitors the low-power related signal.

It should be noted that, a terminal in an RRC connected state or an RRC idle state or an RRC deactivated state may determine the target center frequency, the frequency domain start position, and the first operation of the low-power related signal in the manner provided in the embodiments of this application.

In the embodiments of this application, the method may further include:
performing, by the terminal, a second operation on a serving cell in a case that the terminal starts to monitor the low-power related signal, where the second operation includes at least one of the following:
storing configuration information and/or scheduling information of a third BWP, where the third BWP is a BWP on which the terminal is in a radio resource control RRC connected state and performs uplink transmission or downlink receiving before monitoring the low-power related signal;
switching to a fourth BWP, and storing configuration information and/or scheduling information of the fourth BWP;
storing configuration information and/or scheduling information on all BWPs configured for the terminal or specified on a network; and
clearing configuration information and/or scheduling information on BWPs configured for the terminal other than the third BWP and the fourth BWP.

In the embodiments of this application, before monitoring the low-power related signal, the terminal in the RRC connected state performs uplink transmission or downlink receiving on a third BWP of the serving cell. When the terminal starts to monitor the low-power related signals, the terminal performs, in the serving cell, at least one in the second operation.

For example, in an implementation, when the terminal starts to monitor the low-power related signal, the terminal stores configuration information and/or scheduling information of the third BWP that is applied before monitoring the low-power related signal, and/or when starting to monitor the low-power related signal, the terminal switches to the fourth BWP and stores configuration information and/or scheduling information of the fourth BWP.

Alternatively, in another implementation, when the terminal starts to monitor the low-power related signal, the terminal may alternatively store configuration information and/or scheduling information of all BWPs configured for the terminal or a BWP specified on a network.

Alternatively, in still another implementation, when the terminal starts to monitor the low-power related signal, in addition to the third BWP and the fourth BWP (in a case of switching to the fourth BWP), configuration information and/or scheduling information on other BWPs configured for the terminal is cleared.

It should be noted that, storing may also be referred to as maintaining, for example, maintaining the configuration information and/or the scheduling information of the third BWP. The storing the configuration information and/or the scheduling information of the BWP includes suspending (or skipping clearing or skipping releasing) transmission and receiving of some semi-static configuration information, for example, configuration information of a CORESET and a search space set, including, for example, a semi-persistent scheduling (Semi-Persistent Scheduling, SPS) PDSCH, a configured grant (Configured grant) PUSCH, a scheduling request (Scheduling Request, SR), and data information stored in a hybrid automatic repeat request (Hybrid automatic repeat request, HARQ) buffer (buffer).

In the embodiments of this application, for the terminal in the RRC connected state, when the terminal starts to monitor the low-power related signal, the terminal performs the foregoing second operation in the serving cell. In other words, whether the configuration information and/or the scheduling information of the related BWP is stored after the terminal starts to monitor the low-power related signal is clear, to ensure management of the configuration information and/or the scheduling information of the BWP by the terminal.

Optionally, the fourth BWP includes at least one of the following:
an initial BWP (initial BWP, such as a BWP #0);
a default BWP (default BWP);
a first active downlink BWP (first Active Downlink BWP);
a dormant BWP (dormant BWP);
a BWP on which a CSS of a CSS type 0 and/or a CSS type 1 and/or a CSS type 2 are/is configured, and the third BWP on which the CSS of the CSS type 0 and/or the CSS type 1 and/or the CSS type 2 are/is not configured; and
a BWP on which a PRACH is configured, and the third BWP on which the PRACH is not configured.

It should be noted that, if the CSS of the CSS type 0 and/or the CSS type 1 and/or the CSS type 2 are/is not configured on the third BWP, the terminal may switch to a BWP or an initial BWP on which the CSS of the CSS type 0 and/or the CSS type 1 and/or the CSS type 2 are/is configured when starting to monitor the low-power related signal, where such a BWP is the fourth BWP.

Alternatively, if the PRACH is not configured on the third BWP, the terminal may switch to a BWP or an initial BWP on which the PRACH is configured when starting to monitor the low-power related signal, and such a BWP is the fourth BWP.

Optionally, in a case that the terminal is in an RRC connected state and the terminal is configured with carrier aggregation, and when the terminal starts to monitor the low-power related signal, a state of a serving cell in which the terminal is located is controlled to be a target state, where
the target state includes at least one of the following:
a state before the terminal starts to monitor the low-power related signal;
a deactivated state or a dormant state; and
a state of a primary cell is the state before the terminal starts to monitor the low-power related signal, and a state of a secondary cell is the deactivated state or the dormant state.

In the embodiments of this application, when the terminal in the RRC connected state is configured with carrier aggregation, that is, the terminal can perform downlink receiving and/or uplink transmission on a plurality of carriers/serving cells, and when the terminal starts to monitor the low-power related signal, the terminal controls a state of a serving cell in which the terminal is located to be at least one of the foregoing states.

For example, when starting to monitor the low-power related signal, the terminal may maintain a state of the serving cell to be consistent with a state of the serving cell before the terminal starts to monitor the low-power related signal. For example,
(1) a serving cell (or a carrier) is in an active (active) state before monitoring, and after the terminal starts to monitor the low-power related signal, the serving cell (or the carrier) is still in the active (active) state;
(2) the serving cell (or the carrier) is in a deactivated (deactivated) state before monitoring, and after the terminal starts to monitor the low-power related signal, the serving cell (or the carrier) is still in the deactivated (deactivated) state; and
(3) the serving cell (or the carrier) is in a dormant (dormant) state before monitoring, and after the terminal starts to monitor the low-power related signal, the serving cell (or the carrier) is still in the dormant (dormant) state.

Alternatively, regardless of the state of the serving cell before the terminal monitors the low-power related signal, when the terminal starts to monitor the low-power related signal, the state of the serving cell is controlled to be the deactivated (deactivated) state or the dormant (dormant) state.

Alternatively, the terminal may further separately control a state of the primary cell and a state of the secondary cell. When the terminal starts to monitor the low-power related signal, a state of the primary cell (including only a PCell, or including a PCell and a PSCell) remains unchanged, and a state of the secondary cell is controlled to be the deactivated (deactivated) state or the dormant (dormant) state. For example, before monitoring, the primary cell is in the active (active) state, and the secondary cell is in the active (active) state. After the terminal starts to monitor the low-power related signal, the primary cell is still in the active (active) state, and the secondary cell is in the deactivated (deactivated) state or the dormant (dormant) state.

In the embodiments of this application, when the terminal in the RRC connected state starts to monitor the low-power related signal, the state of the serving cell in which the terminal is located is clear, and a carrier state in which the terminal performs a corresponding operation (namely, the foregoing second operation) on a corresponding BWP is also clear, to ensure communication of the terminal.

In the signal receiving method provided in the embodiments of this application, an execution entity may be a signal receiving apparatus. In the embodiments of this application, the signal receiving apparatus performing the signal receiving method is used as an example to describe the signal receiving apparatus provided in this embodiment of this application.

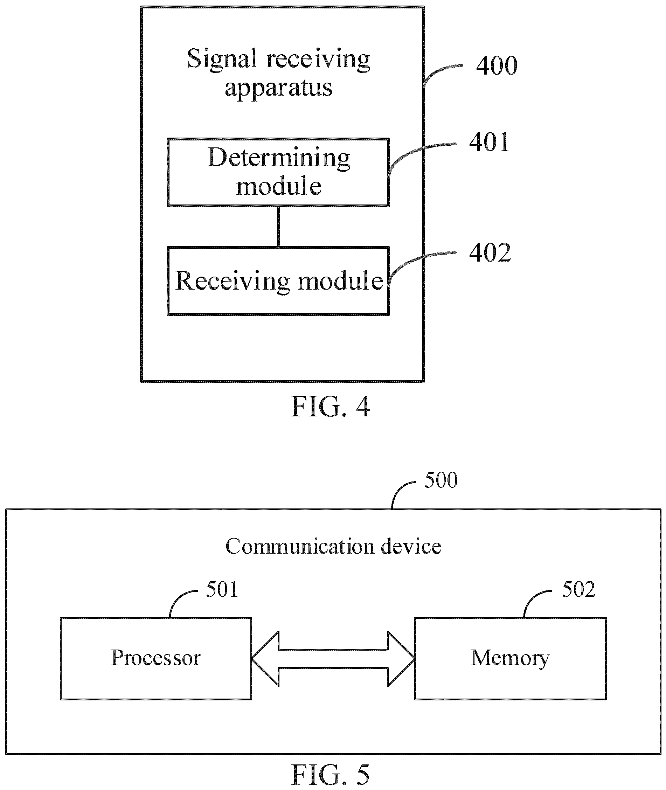

FIG. 4 is a structural diagram of a signal receiving apparatus according to an embodiment of this application. As shown in FIG. 4, the signal receiving apparatus 400 includes:
a determining module 401, configured to determine, according to a first frequency domain parameter or a second frequency domain parameter, a target frequency domain parameter configured for receiving a low-power related signal, where the target frequency domain parameter includes at least one of a target center frequency, a target bandwidth, and target frequency domain start and end positions, the first frequency domain parameter is a frequency domain parameter of a first cell in which the apparatus is located, and the second frequency domain parameter is a frequency domain parameter specified in a protocol or configured on a network side; and
a receiving module 402, configured to receive the low-power related signal according to a frequency domain resource corresponding to the target frequency domain parameter.

Optionally, in a case that the target frequency domain parameter includes the target center frequency, the first frequency domain parameter includes at least one of the following:
a center frequency of the first cell;
a center frequency of a cell defining synchronization signal block CD-SSB of the first cell;
a center frequency of a non cell defining synchronization signal block NCD-SSB of the first cell;
a frequency of a common reference point of the first cell; and
a center frequency of a first bandwidth part BWP of the first cell.

Optionally, the determining module 401 is further configured to perform any one of the following:
in a case that the first frequency domain parameter includes the center frequency of the first cell, obtaining a first frequency offset, and determining, based on the first frequency offset and the center frequency of the first cell, the target center frequency at which the apparatus receives the low-power related signal, where the first frequency offset is a frequency offset that is specified in a protocol or configured on a network side and that is of the target center frequency of the low-power related signal relative to the center frequency of the first cell;
in a case that the first frequency domain parameter includes the center frequency of the CD-SSB of the first cell, obtaining a second frequency offset, and determining, based on the second frequency offset and the center frequency of the CD-SSB, the target center frequency at which the apparatus receives the low-power related signal, where the second frequency offset is a frequency offset that is specified in the protocol or configured on the network side and that is of the target center frequency of the low-power related signal relative to the center frequency of the CD-SSB;
in a case that the first frequency domain parameter includes the center frequency of the NCD-SSB of the first cell, obtaining a third frequency offset, and determining, based on the third frequency offset and the center frequency of the NCD-S SB, the target center frequency at which the apparatus receives the low-power related signal, where the third frequency offset is a frequency offset that is specified in the protocol or configured on the network side and that is of the target center frequency of the low-power related signal relative to the center frequency of the NCD-SSB;
in a case that the first frequency domain parameter includes the frequency of the common reference point of the first cell, obtaining a fourth frequency offset, and determining, based on the fourth frequency offset and the frequency of the common reference point, the target center frequency at which the apparatus receives the low-power related signal, where the fourth frequency offset is a frequency offset that is specified in the protocol or configured on the network side and that is of the target center frequency of the low-power related signal relative to the frequency of the common reference point; and
in a case that the first frequency domain parameter includes the center frequency of the first BWP of the first cell, obtaining a fifth frequency offset, and determining, based on the fifth frequency offset and the center frequency of the first BWP, the target center frequency at which the apparatus receives the low-power related signal, where the fifth frequency offset is a frequency offset that is specified in the protocol or configured on the network side and that is of the target center frequency of the low-power related signal relative to the center frequency of the first BWP.

Optionally, the first cell includes at least one of the following: a serving cell, a primary cell, and a secondary cell.

Optionally, the first BWP includes at least one of the following: a current active BWP, a default BWP, an initial downlink BWP, and a first active downlink BWP.

Optionally, the first BWP is specified in a protocol or configured on a network side, and the first BWP satisfies any one of the following:
the first BWP is configured for transmitting only the low-power related signal; and
the first BWP is configured for transmitting the low-power related signal and other data and signals other than the low-power related signal.

Optionally, in a case that the target frequency domain parameter includes the target frequency domain start position, the first frequency domain parameter includes at least one of the following:
a frequency domain start position of the first cell;
a frequency domain start position of a first BWP of the first cell;
a frequency of a common reference point of the first cell;
a frequency domain start position of a CD-SSB of the first cell; and
a frequency domain start position of an NCD-SSB of the first cell.

Optionally, the determining module 401 is further configured to:
determine the target frequency domain start position of the low-power related signal, where
the determining module 401 is further configured to perform any one of the following:
   obtaining a second frequency domain offset and the frequency domain start position of the first cell, and determining the target frequency domain start position of the low-power related signal based on the second frequency domain offset and the frequency domain start position of the first cell, where the second frequency domain offset is a frequency domain offset that is specified in a protocol or configured on a network side and that is of the target frequency domain start position of the low-power related signal relative to the frequency domain start position of the first cell;
   obtaining a third frequency domain offset and the frequency domain start position of the first BWP of the first cell, and determining the target frequency domain start position of the low-power related signal based on the third frequency domain offset and the frequency domain start position of the first BWP, where the third frequency domain offset is a frequency domain offset that is specified in the protocol or configured on the network side and that is of the target frequency domain start position of the low-power related signal relative to the frequency domain start position of the first BWP;
   obtaining a fourth frequency domain offset and the frequency domain start position of the common reference point of the first cell, and determining the target frequency domain start position of the low-power related signal based on the fourth frequency domain offset and the frequency domain start position of the common reference point, where the fourth frequency domain offset is a frequency domain offset that is specified in the protocol or configured on the network side and that is of the target frequency domain start position of the low-power related signal relative to the frequency domain start position of the common reference point;
   obtaining a fifth frequency domain offset and the frequency domain start position of the CD-SSB of the first cell, and determining the target frequency domain start position of the low-power related signal based on the fifth frequency domain offset and the frequency domain start position of the CD-SSB, where the fifth frequency domain offset is a frequency domain offset that is specified in the protocol or configured on the network side and that is of the target frequency domain start position of the low-power related signal relative to the frequency domain start position of the CD-SSB; and
   obtaining a sixth frequency domain offset and the frequency domain start position of the NCD-SSB of the first cell, and determining the target frequency domain start position of the low-power related signal based on the sixth frequency domain offset and the frequency domain start position of the NCD-SSB, where the sixth frequency domain offset is a frequency domain offset that is specified in the protocol or configured on the network side and that is of the target frequency domain start position of the low-power related signal relative to the frequency domain start position of the NCD-SSB.

Optionally, in a case that the target frequency domain parameter includes the target bandwidth, the determining module 401 is further configured to determine, according to at least one of the following, the target bandwidth configured for receiving the low-power related signal:
a network side configuration;
a capability of the apparatus; and
protocol specification.

Optionally, the apparatus further includes:
a first execution module, configured to perform a first operation on a second BWP after the apparatus stops monitoring the low-power related signal or is woken up by the low-power related signal, where
the first operation includes at least one of the following:
   receiving and/or measuring a synchronization signal block SSB;
   monitoring a physical downlink control channel PDCCH transmitted on a first target common search space CSS type, where the first target CSS type includes at least one of a CSS type 0, a CSS type 0A, a CSS type 1, and a CSS type 2;
   monitoring a PDCCH transmitted on a second target CSS type, where the second target CSS type includes a CSS type 3;
   monitoring a PDCCH transmitted on a terminal-specific search space USS;
   receiving a physical downlink shared channel PDSCH;
   receiving and/or measuring a downlink channel state information reference signal CSI-RS;
   receiving and/or measuring a tracking reference signal TRS;
   transmitting a target channel, where the target channel includes at least one of the following: a physical random access channel PRACH, a physical uplink shared channel PUSCH, and a physical uplink control channel PUCCH; and
   transmitting a sounding reference signal SRS.

Optionally, the second BWP includes at least one of the following:
an initial BWP;
a default BWP;
a first active downlink BWP;
a current active BWP; and
a target BWP specified in a protocol or configured on a network side, where the target BWP is a BWP on which the first operation is performed after the apparatus is woken up by a low-power wake-up signal.

Optionally, the current active BWP includes at least one of the following:
a BWP on which the low-power related signal is transmitted; and
a BWP used before the apparatus monitors the low-power related signal.

Optionally, the apparatus further includes:
a second execution module, configured to perform a second operation on a serving cell in a case that the apparatus starts to monitor the low-power related signal, where the second operation includes at least one of the following:
storing configuration information and/or scheduling information of a third BWP, where the third BWP is a BWP on which the apparatus is in a radio resource control RRC connected state and performs uplink transmission or downlink receiving before monitoring the low-power related signal;
switching to a fourth BWP, and storing configuration information and/or scheduling information of the fourth BWP;
storing configuration information and/or scheduling information on all BWPs configured for the apparatus or specified on a network; and
clearing configuration information and/or scheduling information on BWPs configured for the apparatus other than the third BWP and the fourth BWP.

Optionally, the fourth BWP includes at least one of the following:
an initial BWP;
a default BWP;
a first active downlink BWP;
a dormant BWP;
a BWP on which a CSS of a CSS type 0 and/or a CSS type 1 and/or a CSS type 2 are/is configured, and the third BWP on which the CSS of the CSS type 0 and/or the CSS type 1 and/or the CSS type 2 are/is not configured; and
a BWP on which a PRACH is configured, and the third BWP on which the PRACH is not configured.

Optionally, the apparatus further includes:
a control module, configured to control, in a case that the apparatus is in an RRC connected state and the apparatus is configured with carrier aggregation, and when the apparatus starts to monitor the low-power related signal, controlling a state of a serving cell in which the apparatus is located to be a target state, where
the target state includes at least one of the following:
   a state before the apparatus starts to monitor the low-power related signal;
   a deactivated state or a dormant state; and
   a state of a primary cell is a state before the apparatus starts to monitor the low-power related signal, and a state of a secondary cell is the deactivated state or the dormant state.

Optionally, the low-power related signal includes the low-power wake-up signal and a low-power beacon signal, and the determining module 401 is further configured to:
determine a target frequency domain parameter of a second signal based on a target frequency domain parameter of a first signal, where
the first signal is one of the low-power wake-up signal and the low-power beacon signal, and the second signal is the other of the low-power wake-up signal and the low-power beacon signal.

Optionally, the determining module 401 is further configured to:
in a case that the target frequency domain parameter includes the target center frequency, determine the target center frequency of the first signal as the target center frequency of the second signal, or determine the target center frequency of the second signal based on the target center frequency of the first signal and a preset frequency offset; and
in a case that the target frequency domain parameter includes a target frequency domain resource, determine a target frequency domain resource of the first signal as a target frequency domain resource of the second signal, or determine a target frequency domain resource of the second signal based on at least one of a target frequency domain resource of the first signal and the preset frequency domain offset, where the target frequency domain resource includes at least one of the target bandwidth and the target frequency domain start and end positions.

In this embodiment of this application, the apparatus can determine the target frequency domain parameter of the low-power related signal based on the first frequency domain parameter of the first cell in which the apparatus is located or the second frequency domain parameter specified in the protocol or configured on the network side, so that the apparatus can receive the low-power related signal based on the determined target frequency domain parameter. In this way, it is clear that the apparatus receives the frequency domain parameter of the low-power related signal, to ensure that the apparatus can receive the low-power related signal and to ensure communication performance of the terminal.

The signal receiving apparatus 400 in the embodiments of this application may be an electronic device, for example, an electronic device having an operating system, or may be a component in the electronic device, for example, an integrated circuit or a chip. The electronic device may be a terminal, or may be a device other than the terminal. For example, the terminal may include, but is not limited to, a type of the terminal 11 listed above. Another device may be a server, a network attached storage (Network Attached Storage, NAS), or the like. This is not specifically limited in the embodiments of this application.

The signal receiving apparatus 400 provided in this embodiment of this application can implement various processes implemented by the terminal of the method embodiment in FIG. 3, and achieve the same technical effect. To avoid repetition, details are not described herein again.

Optionally, as shown in FIG. 5, an embodiment of this application further provides a communication device 500, including a processor 501 and a memory 502, where a program or instructions, executable on the processor 501, are stored in the memory 502. For example, when the communication device 500 is a terminal, the program or the instructions, when executed by the processor 501, implement the various steps of the method embodiment in FIG. 3, and can achieve the same technical effect. To avoid repetition, details are not described herein again.

The embodiments of this application further provide a terminal, including a processor and a communication interface, where the processor is configured to determine, according to a first frequency domain parameter or a second frequency domain parameter, a target frequency domain parameter configured for receiving a low-power related signal, where the target frequency domain parameter includes at least one of a target center frequency, a target bandwidth, and target frequency domain start and end positions, the first frequency domain parameter is a frequency domain parameter of a first cell in which the terminal is located, and the second frequency domain parameter is a frequency domain parameter specified in a protocol or configured on a network side; and
the communication interface is configured to receive the low-power related signal according to a frequency domain resource corresponding to the target frequency domain parameter.

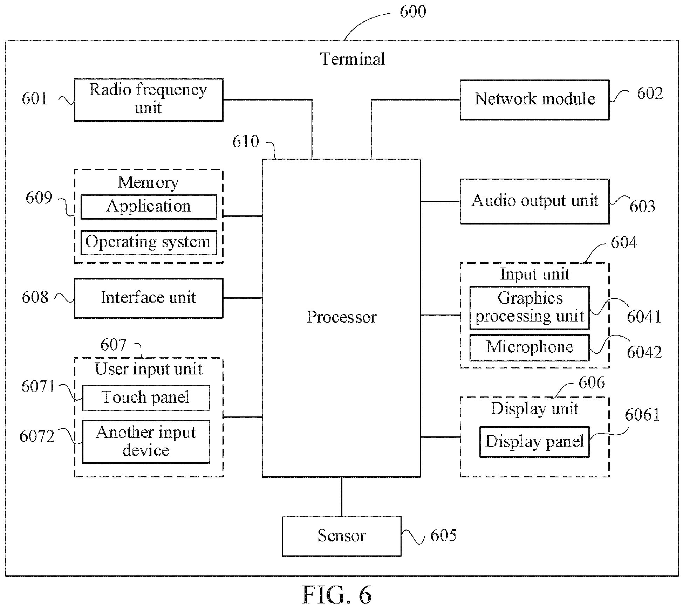

This terminal embodiment corresponds to the terminal side method embodiment. Each implementation process and implementation of the method embodiment may be applied to the terminal embodiment, and can achieve the same technical effect. Specifically, FIG. 6 is a schematic diagram of a hardware structure of a terminal according to an embodiment of this application.

The terminal 600 includes, but is not limited to, at least a part of components such as a radio frequency unit 601, a network module 602, an audio output unit 603, an input unit 604, a sensor 605, a display unit 606, a user input unit 607, an interface unit 608, a memory 609, and a processor 610.

A person skilled in the art may understand that the terminal 600 may further include the power supply (such as a battery) for supplying power to the components. The power supply may be logically connected to the processor 610 by a power management system, thereby implementing functions such as charging, discharging, and power consumption management by using the power management system. A terminal structure shown in FIG. 6 does not constitute a limitation to the terminal, and the terminal may include more or fewer components than those shown in the figure, or some components may be combined, or a different component deployment may be used, and details are not repeated herein.

It should be understood that, in this embodiment of this application, the input unit 604 may include a graphics processing unit (Graphics Processing Unit, GPU) 6041 and a microphone 6042. The graphics processing unit 6041 performs processing on image data of a static picture or a video that is obtained by an image acquisition apparatus (for example, a camera) in a video acquisition mode or an image acquisition mode. The display unit 606 may include a display panel 6061, and the display panel 6061 may be configured by using a liquid crystal display, an organic light-emitting diode, or the like. The user input unit 607 includes at least one of a touch panel 6071 and another input device 6072. The touch panel 6071 is also referred to as a touchscreen. The touch panel 6071 may include two parts: a touch detection apparatus and a touch controller. The another input device 6072 may include, but not limited to, a physical keyboard, a functional key (such as a volume control key or a switch key), a track ball, a mouse, and a joystick, which are not described herein in detail.

In the embodiments of this application, after receiving downlink data from the network side device, the radio frequency unit 601 may transmit the downlink data to the processor 610 for processing. In addition, the radio frequency unit 601 may transmit uplink data to the network side device. Generally, the radio frequency unit 601 includes, but is not limited to, an antenna, an amplifier, a transceiver, a coupler, a low noise amplifier, a duplexer, and the like. In addition, the radio frequency circuit may further communicate with another device through wireless communication.

The memory 609 may be configured to store a software program or an instruction and various data. The memory 609 may mainly include a first storage area storing a program or instructions and a second storage area storing data. The first storage area may store an operating system, an application program or instructions required by at least one function (such as a sound playback function and an image display function), and the like. In addition, the memory 609 may include a volatile memory or a non-volatile memory, or the memory 609 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DR RAM). The memory 609 in this embodiment of this application includes but is not limited to these memories and any other suitable types of memories.

The processor 610 may include one or more processing units; and optionally, the processor 610 integrates an application processor and a modem processor. The application processor mainly processes operations relating to an operating system, a user interface, an application program, and the like. The modem processor mainly processes a wireless communication signal, such as a baseband processor. It may be understood that, the foregoing modem processor may also not be integrated into the processor 610.

The processor 610 is configured to determine, according to a first frequency domain parameter or a second frequency domain parameter, a target frequency domain parameter configured for receiving a low-power related signal, where the target frequency domain parameter includes at least one of a target center frequency, a target bandwidth, and target frequency domain start and end positions, the first frequency domain parameter is a frequency domain parameter of a first cell in which the terminal is located, and the second frequency domain parameter is a frequency domain parameter specified in a protocol or configured on a network side; and
the radio frequency unit 601 is configured to receive the low-power related signal according to a frequency domain resource corresponding to the target frequency domain parameter.

In the embodiments of this application, the terminal can determine the target frequency domain parameter of the low-power related signal based on the first frequency domain parameter of the first cell in which the terminal is located or the second frequency domain parameter specified in the protocol or configured on the network side, so that the terminal can receive the low-power related signal based on the determined target frequency domain parameter. In this way, it is clear that the terminal receives the frequency domain parameter of the low-power related signal, to ensure that the terminal can receive the low-power related signal, and ensure communication performance of the terminal.

It should be noted that, the terminal provided in the embodiments of this application can implement various processes implemented by the terminal of the method embodiment in FIG. 3, and achieve the same technical effect. To avoid repetition, details are not described herein again.

The embodiments of this application further provide a readable storage medium, where the readable storage medium stores a program or instructions. The program or the instructions, when executed by a processor, implement the various processes of the method embodiment in FIG. 3, and can achieve the same technical effect. To avoid repetition, details are not described herein again.

The processor is a processor in the terminal described in the foregoing embodiment. The readable storage medium includes a computer-readable storage medium, for example, a computer read-only memory ROM, a random access memory RAM, a magnetic disk, or an optical disc.

The embodiments of this application further provide a chip. The chip includes a processor and a communication interface. The communication interface is coupled to the processor. The processor is configured to run a program or instructions, to implement the various processes of the method embodiment in FIG. 3, and can achieve the same technical effect. To avoid repetition, details are not described herein again.

It should be understood that, the chip mentioned in the embodiments of this application may be further referred to as a system-level chip, a system chip, a chip system, a system-on-chip, or the like.

The embodiments of this application further provide a computer program/program product, where the computer program/program product is stored in a storage medium, and the computer program/program product is executed by at least one processor to implement the various processes of the foregoing method embodiment in FIG. 3, and can achieve the same technical effect. To avoid repetition, details are not described herein again.

The embodiments of this application further provide a communication system, including: a terminal and a network side device, where the terminal may be configured to perform the steps of the signal receiving method as described above.

It should be noted that, the terms "include", "comprise" or any other variants mean to cover the non-exclusive inclusion, so that the processes, methods,
objects, or apparatuses which include a series of elements not only include those elements, but also include other elements which are not clearly listed, or include inherent elements of the processes, methods, objects, or apparatuses. Without more limitations, elements defined by the sentence "including one" does not exclude that there are still other same elements in the processes, methods, objects, or apparatuses. In addition, it should be noted that the scope of the methods and apparatuses in the implementations of this application is not limited to performing functions in the order shown or discussed, and may further include performing functions in a substantially simultaneous manner or in a reverse order according to the functions involved, for example, the described methods may be performed in an order different from the order described, and various steps may be added, omitted, or combined. In addition, features described with reference to some examples may be combined in other examples.

Through the foregoing description on the implementations, a person skilled in the art can clearly learn that the foregoing embodiment methods may be implemented by using software in combination with a necessary universal hardware platform. Certainly, the embodiment methods may also be implemented by using hardware, but the former is a better implementation in many cases. Based on such an understanding, the technical solutions of this application essentially, or the part contributing to the related art, may be presented in the form of a computer software product. The computer software product is stored in a storage medium (for example, a ROM/RAM, a magnetic disk, or an optical disc) including several instructions to enable a terminal (which may be a mobile phone, a computer, a server, an air conditioner, a network device, or the like) to perform the methods described in the embodiments of this application.

Although the embodiments of this application have been described above with reference to the accompanying drawings, this application is not limited to the specific implementations described above, and the specific implementations described above are merely exemplary and not limitative. A person of ordinary skill in the art may make various variations under the teaching of this application without departing from the spirit of this application and the protection scope of the claims, and such variations shall all fall within the protection scope of this application.

## Claims

1. A signal receiving method, comprising:
determining, by a terminal according to a first frequency domain parameter or a second frequency domain parameter, a target frequency domain parameter configured for receiving a low-power related signal, wherein the target frequency domain parameter comprises at least one of a target center frequency, a target bandwidth, and target frequency domain start and end positions, the first frequency domain parameter is a frequency domain parameter of a first cell in which the terminal is located, and the second frequency domain parameter is a frequency domain parameter specified in a protocol or configured on a network side; and
receiving, by the terminal, the low-power related signal according to a frequency domain resource corresponding to the target frequency domain parameter.

2. The method according to claim 1, wherein in a case that the target frequency domain parameter comprises the target center frequency,
the first frequency domain parameter comprises at least one of the following: a center frequency of the first cell;
a center frequency of a cell defining synchronization signal block CD-SSB of the first cell;
a center frequency of a non cell defining synchronization signal block NCD-SSB of the first cell;
a frequency of a common reference point of the first cell; and
a center frequency of a first bandwidth part BWP of the first cell.

3. The method according to claim 2, wherein the determining, by a terminal according to a first frequency domain parameter, a target frequency domain parameter configured for receiving a low-power related signal comprises any one of the following:
in a case that the first frequency domain parameter comprises the center frequency of the first cell, obtaining, by the terminal, a first frequency offset, and determining, based on the first frequency offset and the center frequency of the first cell, the target center frequency at which the terminal receives the low-power related signal, wherein the first frequency offset is a frequency offset that is specified in a protocol or configured on a network side and that is of the target center frequency of the low-power related signal relative to the center frequency of the first cell;
in a case that the first frequency domain parameter comprises the center frequency of the CD-SSB of the first cell, obtaining, by the terminal, a second frequency offset, and determining, based on the second frequency offset and the center frequency of the CD-SSB, the target center frequency at which the terminal receives the low-power related signal, wherein the second frequency offset is a frequency offset that is specified in the protocol or configured on the network side and that is of the target center frequency of the low-power related signal relative to the center frequency of the CD-SSB;
in a case that the first frequency domain parameter comprises the center frequency of the NCD-SSB of the first cell, obtaining, by the terminal, a third frequency offset, and determining, based on the third frequency offset and the center frequency of the NCD-SSB, the target center frequency at which the terminal receives the low-power related signal, wherein the third frequency offset is a frequency offset that is specified in the protocol or configured on the network side and that is of the target center frequency of the low-power related signal relative to the center frequency of the NCD-SSB;
in a case that the first frequency domain parameter comprises the frequency of the common reference point of the first cell, obtaining, by the terminal, a fourth frequency offset, and determining, based on the fourth frequency offset and the frequency of the common reference point, the target center frequency at which the terminal receives the low-power related signal, wherein the fourth frequency offset is a frequency offset that is specified in the protocol or configured on the network side and that is of the target center frequency of the low-power related signal relative to the frequency of the common reference point; and
in a case that the first frequency domain parameter comprises the center frequency of the first BWP of the first cell, obtaining, by the terminal, a fifth frequency offset, and determining, based on the fifth frequency offset and the center frequency of the first BWP, the target center frequency at which the terminal receives the low-power related signal, wherein the fifth frequency offset is a frequency offset that is specified in the protocol or configured on the network side and that is of the target center frequency of the low-power related signal relative to the center frequency of the first BWP.

4. The method according to claim 1, wherein the first cell comprises at least one of the following: a serving cell, a primary cell, and a secondary cell.

5. The method according to claim 2, wherein the first BWP comprises at least one of the following: a current active BWP, a default BWP, an initial downlink BWP, and a first active downlink BWP.

6. The method according to claim 1, wherein in a case that the target frequency domain parameter comprises the target frequency domain start position, the first frequency domain parameter comprises at least one of the following:
a frequency domain start position of the first cell;
a frequency domain start position of a first BWP of the first cell;
a frequency of a common reference point of the first cell;
a frequency domain start position of a CD-SSB of the first cell; and
a frequency domain start position of an NCD-SSB of the first cell.

7. The method according to claim 6, wherein
the determining, by a terminal according to a first frequency domain parameter, a target frequency domain parameter configured for receiving a low-power related signal comprises at least one of the following:
obtaining, by the terminal, a second frequency domain offset and the frequency domain start position of the first cell, and determining the target frequency domain start position of the low-power related signal based on the second frequency domain offset and the frequency domain start position of the first cell, wherein the second frequency domain offset is a frequency domain offset that is specified in a protocol or configured on a network side and that is of the target frequency domain start position of the low-power related signal relative to the frequency domain start position of the first cell;
obtaining, by the terminal, a third frequency domain offset and the frequency domain start position of the first BWP of the first cell, and determining the target frequency domain start position of the low-power related signal based on the third frequency domain offset and the frequency domain start position of the first BWP, wherein the third frequency domain offset is a frequency domain offset that is specified in the protocol or configured on the network side and that is of the target frequency domain start position of the low-power related signal relative to the frequency domain start position of the first BWP;
obtaining, by the terminal, a fourth frequency domain offset and the frequency domain start position of the common reference point of the first cell, and determining the target frequency domain start position of the low-power related signal based on the fourth frequency domain offset and the frequency domain start position of the common reference point, wherein the fourth frequency domain offset is a frequency domain offset that is specified in the protocol or configured on the network side and that is of the target frequency domain start position of the low-power related signal relative to the frequency domain start position of the common reference point;
obtaining, by the terminal, a fifth frequency domain offset and the frequency domain start position of the CD-SSB of the first cell, and determining the target frequency domain start position of the low-power related signal based on the fifth frequency domain offset and the frequency domain start position of the CD-SSB, wherein the fifth frequency domain offset is a frequency domain offset that is specified in the protocol or configured on the network side and that is of the target frequency domain start position of the low-power related signal relative to the frequency domain start position of the CD-SSB; and
obtaining, by the terminal, a sixth frequency domain offset and the frequency domain start position of the NCD-SSB of the first cell, and determining the target frequency domain start position of the low-power related signal based on the sixth frequency domain offset and the frequency domain start position of the NCD-SSB, wherein the sixth frequency domain offset is a frequency domain offset that is specified in the protocol or configured on the network side and that is of the target frequency domain start position of the low-power related signal relative to the frequency domain start position of the NCD-SSB.

8. The method according to claim 1, wherein the determining, by a terminal according to a second frequency domain parameter, a target frequency domain parameter configured for receiving a low-power related signal comprises at least one of the following:
determining, by the terminal according to a center frequency specified in a protocol or configured on a network side, the target center frequency configured for receiving the low-power related signal; and
determining, by the terminal according to the center frequency specified in the protocol or configured on the network side and a first frequency offset, the frequency domain start position configured for receiving the low-power related signal.

9. The method according to claim 1, wherein in a case that the target frequency domain parameter comprises the target bandwidth, the terminal determines, according to at least one of the following, the target bandwidth configured for receiving the low-power related signal: a network side configuration, a capability of the terminal, and protocol specification.

10. The method according to claim 1, wherein the method further comprises:
performing, by the terminal, a first operation on a second BWP after the terminal stops monitoring the low-power related signal or is woken up by the low-power related signal, wherein
the first operation comprises at least one of the following:
receiving and/or measuring a synchronization signal block SSB;
monitoring a physical downlink control channel PDCCH transmitted on a first target common search space CSS type, wherein the first target CSS type comprises at least one of a CSS type 0, a CSS type 0A, a CSS type 1, and a CSS type 2;
monitoring a PDCCH transmitted on a second target CSS type, wherein the second target CSS type comprises a CSS type 3;
monitoring a PDCCH transmitted on a terminal-specific search space USS;
receiving a physical downlink shared channel PDSCH;
receiving and/or measuring a downlink channel state information reference signal CSI-RS;
receiving and/or measuring a tracking reference signal TRS;
transmitting a target channel, wherein the target channel comprises at least one of the following: a physical random access channel PRACH, a physical uplink shared channel PUSCH, and a physical uplink control channel PUCCH; and
transmitting a sounding reference signal SRS.

11. The method according to claim 10, wherein the second BWP comprises at least one of the following:
an initial BWP;
a default BWP;
a first active downlink BWP;
a current active BWP; and
a target BWP specified in a protocol or configured on a network side, wherein the target BWP is a BWP on which the first operation is performed after the terminal is woken up by a low-power wake-up signal.

12. The method according to claim 11, wherein the current active BWP comprises at least one of the following:
a BWP on which the low-power related signal is transmitted; and
a BWP used before the terminal monitors the low-power related signal.

13. The method according to claim 1, wherein the method further comprises:
performing, by the terminal, a second operation on a serving cell in a case that the terminal starts to monitor the low-power related signal, wherein the second operation comprises at least one of the following:
storing configuration information and/or scheduling information of a third BWP, wherein the third BWP is a BWP on which the terminal is in a radio resource control RRC connected state and performs uplink transmission or downlink receiving before monitoring the low-power related signal;
switching to a fourth BWP, and storing configuration information and/or scheduling information of the fourth BWP;
storing configuration information and/or scheduling information on all BWPs configured for the terminal or specified on a network; and
clearing configuration information and/or scheduling information on BWPs configured for the terminal other than the third BWP and the fourth BWP.

14. The method according to claim 13, wherein the fourth BWP comprises at least one of the following:
an initial BWP;
a default BWP;
a first active downlink BWP;
a dormant BWP;
a BWP on which a CSS of a CSS type 0 and/or a CSS type 1 and/or a CSS type 2 are/is configured, and the third BWP on which the CSS of the CSS type 0 and/or the CSS type 1 and/or the CSS type 2 are/is not configured; and
a BWP on which a PRACH is configured, and the third BWP on which the PRACH is not configured.

15. The method according to claim 1, wherein the method further comprises:
in a case that the terminal is in an RRC connected state and the terminal is configured with carrier aggregation, and when the terminal starts to monitor the low-power related signal, controlling a state of a serving cell in which the terminal is located to be a target state, wherein
the target state comprises at least one of the following:
a state before the terminal starts to monitor the low-power related signal;
a deactivated state or a dormant state; and
a state of a primary cell is the state before the terminal starts to monitor the low-power related signal, and a state of a secondary cell is the deactivated state or the dormant state.

16. The method according to claim 1, wherein the low-power related signal comprises a low-power wake-up signal and a low-power beacon signal, and the method further comprises:
determining, by the terminal, a target frequency domain parameter of a second signal based on a target frequency domain parameter of a first signal, wherein
the first signal is one of the low-power wake-up signal and the low-power beacon signal, and the second signal is the other of the low-power wake-up signal and the low-power beacon signal.

17. The method according to claim 16, wherein the determining, by the terminal, a target frequency domain parameter of a second signal based on a target frequency domain parameter of a first signal comprises:
in a case that the target frequency domain parameter comprises the target center frequency, determining, by the terminal, the target center frequency of the first signal as the target center frequency of the second signal, or determining the target center frequency of the second signal based on the target center frequency of the first signal and a preset frequency offset; and
in a case that the target frequency domain parameter comprises a target frequency domain resource, determining, by the terminal, the target frequency domain resource of the first signal as the target frequency domain resource of the second signal, or determining the target frequency domain resource of the second signal based on at least one of the target frequency domain resource of the first signal and the preset frequency domain offset, wherein the target frequency domain resource comprises at least one of the target bandwidth and the target frequency domain start and end positions.

18. A signal receiving apparatus, comprising:
a determining module, configured to determine, according to a first frequency domain parameter or a second frequency domain parameter, a target frequency domain parameter configured for receiving a low-power related signal, wherein the target frequency domain parameter comprises at least one of a target center frequency, a target bandwidth, and target frequency domain start and end positions, the first frequency domain parameter is a frequency domain parameter of a first cell in which the apparatus is located, and the second frequency domain parameter is a frequency domain parameter specified in a protocol or configured on a network side; and
a receiving module, configured to receive the low-power related signal according to a frequency domain resource corresponding to the target frequency domain parameter.

19. The apparatus according to claim 18, in a case that the target frequency domain parameter comprises the target center frequency, the first frequency domain parameter comprises at least one of the following:
a center frequency of the first cell;
a center frequency of a cell defining synchronization signal block CD-SSB of the first cell;
a center frequency of a non cell defining synchronization signal block NCD-SSB of the first cell;
a frequency of a common reference point of the first cell; and
a center frequency of a first bandwidth part BWP of the first cell.

20. The apparatus according to claim 19, wherein the determining module is further configured to perform any one of the following:
in a case that the first frequency domain parameter comprises the center frequency of the first cell, obtaining a first frequency offset, and determining, based on the first frequency offset and the center frequency of the first cell, the target center frequency at which the apparatus receives the low-power related signal, wherein the first frequency offset is a frequency offset that is specified in a protocol or configured on a network side and that is of the target center frequency of the low-power related signal relative to the center frequency of the first cell;
in a case that the first frequency domain parameter comprises the center frequency of the CD-SSB of the first cell, obtaining a second frequency offset, and determining, based on the second frequency offset and the center frequency of the CD-SSB, the target center frequency at which the apparatus receives the low-power related signal, wherein the second frequency offset is a frequency offset that is specified in the protocol or configured on the network side and that is of the target center frequency of the low-power related signal relative to the center frequency of the CD-SSB;
in a case that the first frequency domain parameter comprises the center frequency of the NCD-SSB of the first cell, obtaining a third frequency offset, and determining, based on the third frequency offset and the center frequency of the NCD-SSB, the target center frequency at which the apparatus receives the low-power related signal, wherein the third frequency offset is a frequency offset that is specified in the protocol or configured on the network side and that is of the target center frequency of the low-power related signal relative to the center frequency of the NCD-SSB;
in a case that the first frequency domain parameter comprises the frequency of the common reference point of the first cell, obtaining a fourth frequency offset, and determining, based on the fourth frequency offset and the frequency of the common reference point, the target center frequency at which the apparatus receives the low-power related signal, wherein the fourth frequency offset is a frequency offset that is specified in the protocol or configured on the network side and that is of the target center frequency of the low-power related signal relative to the frequency of the common reference point; and
in a case that the first frequency domain parameter comprises the center frequency of the first BWP of the first cell, obtaining a fifth frequency offset, and determining, based on the fifth frequency offset and the center frequency of the first BWP, the target center frequency at which the apparatus receives the low-power related signal, wherein the fifth frequency offset is a frequency offset that is specified in the protocol or configured on the network side and that is of the target center frequency of the low-power related signal relative to the center frequency of the first BWP.

21. The apparatus according to claim 18, wherein in a case that the target frequency domain parameter comprises the target frequency domain start position, the first frequency domain parameter comprises at least one of the following:
a frequency domain start position of the first cell;
a frequency domain start position of a first BWP of the first cell;
a frequency of a common reference point of the first cell;
a frequency domain start position of a CD-SSB of the first cell; and
a frequency domain start position of an NCD-SSB of the first cell.

22. The apparatus according to claim 21, wherein the determining module is further configured to:
determine the target frequency domain start position of the low-power related signal, wherein
the determining module is further configured to perform any one of the following:
obtaining a second frequency domain offset and the frequency domain start position of the first cell, and determining the target frequency domain start position of the low-power related signal based on the second frequency domain offset and the frequency domain start position of the first cell, wherein the second frequency domain offset is a frequency domain offset that is specified in a protocol or configured on a network side and that is of the target frequency domain start position of the low-power related signal relative to the frequency domain start position of the first cell;
obtaining a third frequency domain offset and the frequency domain start position of the first BWP of the first cell, and determining the target frequency domain start position of the low-power related signal based on the third frequency domain offset and the frequency domain start position of the first BWP, wherein the third frequency domain offset is a frequency domain offset that is specified in the protocol or configured on the network side and that is of the target frequency domain start position of the low-power related signal relative to the frequency domain start position of the first BWP;
obtaining a fourth frequency domain offset and the frequency domain start position of the common reference point of the first cell, and determining the target frequency domain start position of the low-power related signal based on the fourth frequency domain offset and the frequency domain start position of the common reference point, wherein the fourth frequency domain offset is a frequency domain offset that is specified in the protocol or configured on the network side and that is of the target frequency domain start position of the low-power related signal relative to the frequency domain start position of the common reference point;
obtaining a fifth frequency domain offset and the frequency domain start position of the CD-SSB of the first cell, and determining the target frequency domain start position of the low-power related signal based on the fifth frequency domain offset and the frequency domain start position of the CD-SSB, wherein the fifth frequency domain offset is a frequency domain offset that is specified in the protocol or configured on the network side and that is of the target frequency domain start position of the low-power related signal relative to the frequency domain start position of the CD-SSB; and
obtaining a sixth frequency domain offset and the frequency domain start position of the NCD-SSB of the first cell, and determining the target frequency domain start position of the low-power related signal based on the sixth frequency domain offset and the frequency domain start position of the NCD-SSB, wherein the sixth frequency domain offset is a frequency domain offset that is specified in the protocol or configured on the network side and that is of the target frequency domain start position of the low-power related signal relative to the frequency domain start position of the NCD-SSB.

23. The apparatus according to claim 18, wherein in a case that the target frequency domain parameter comprises the target bandwidth, the determining module is further configured to determine, according to at least one of the following, the target bandwidth configured for receiving the low-power related signal: a network side configuration, a capability of the apparatus, and protocol specification.

24. The apparatus according to claim 18, further comprising:
a first execution module, configured to perform a first operation on a second BWP after the apparatus stops monitoring the low-power related signal or is woken up by the low-power related signal, wherein
the first operation comprises at least one of the following:
receiving and/or measuring a synchronization signal block SSB;
monitoring a physical downlink control channel PDCCH transmitted on a first target common search space CSS type, wherein the first target CSS type comprises at least one of a CSS type 0, a CSS type 0A, a CSS type 1, and a CSS type 2;
monitoring a PDCCH transmitted on a second target CSS type, wherein the second target CSS type comprises a CSS type 3;
monitoring a PDCCH transmitted on a terminal-specific search space USS;
receiving a physical downlink shared channel PDSCH;
receiving and/or measuring a downlink channel state information reference signal CSI-RS;
receiving and/or measuring a tracking reference signal TRS;
transmitting a target channel, wherein the target channel comprises at least one of the following: a physical random access channel PRACH, a physical uplink shared channel PUSCH, and a physical uplink control channel PUCCH; and
transmitting a sounding reference signal SRS.

25. The apparatus according to claim 18, further comprising:
a second execution module, configured to perform a second operation on a serving cell in a case that the apparatus starts to monitor the low-power related signal, wherein the second operation comprises at least one of the following:
storing configuration information and/or scheduling information of a third BWP, wherein the third BWP is a BWP on which the apparatus is in a radio resource control RRC connected state and performs uplink transmission or downlink receiving before monitoring the low-power related signal;
switching to a fourth BWP, and storing configuration information and/or scheduling information of the fourth BWP;
storing configuration information and/or scheduling information on all BWPs configured for the apparatus or specified on a network; and
clearing configuration information and/or scheduling information on BWPs configured for the apparatus other than the third BWP and the fourth BWP.

26. A terminal, comprising a processor and a memory, wherein the memory stores a program or instructions executable on the processor, and the program or the instructions, when executed by the processor, implement the steps of the signal receiving method according to any one of claims 1 to 17.

27. A readable storage medium, wherein the readable storage medium stores a program or instructions, and the program or the instructions, when executed by a processor, implement the steps of the signal receiving method according to any one of claims 1 to 17.
